# EUROPEAN PATENT APPLICATION

(11) **EP 4 773 264 A1**
(43) Date of publication of application: **08.07.2026**
(21) Application number: 24913370.3
(22) Date of filing: 24.12.2024
(51) Int. Cl.: H01M 8/04119, B01D 63/04

(54) **MEMBRANE HUMIDIFIER, IN WHICH BAFFLE IS PROVIDED, FOR FUEL CELL**

(30) Priority: 26.12.2023 KR 20230191863
(71) Applicant: Kolon Industries, Inc., Seoul 07793 (KR)
(72) Inventor: KI, Sung Kwan, Seoul 07793 (KR); KIM, Do Woo, Seoul 07793 (KR); YANG, Hyoung Mo, Seoul 07793 (KR); KIM, In Ho, Seoul 07793 (KR)
(74) Representative: Vossius & Partner Patentanwälte Rechtsanwälte mbB
(86) International application number: PCT/KR2024/021055
(87) International publication number: WO 2025/143763

(57) **Abstract**

A membrane humidifier, in which a baffle is provided, for a fuel of the present disclosure includes a mid-case in which a fluid movement port through which fluid passes is provided, a fluid movement unit arranged in the fluid movement port of the mid-case, and a cartridge which is arranged inside the mid-case and in which a humidification membrane is provided, wherein the fluid movement unit includes a baffle which is provided in the fluid movement port and in which a plurality of windows are provided, and a mid-end cap connected to the mid-case outside the fluid movement port.

## Description

### Technical Field

The present disclosure relates to a membrane humidifier, in which a baffle is provided, for a fuel cell, and more particularly, to a membrane humidifier, in which a baffle is provided, for a fuel cell, the membrane humidifier including the baffle, a mid-end cap, and a fluid movement unit through which fluid enters and exists and which is coupled to a mid-case so that the flow distribution of a large capacity membrane humidifier may be enhanced.

### Background Art

A fuel cell is a power-generating cell that bonds hydrogen and oxygen to generate electricity. Unlike normal chemical batteries such as a battery or a storage battery, a fuel cell may continuously produce electricity as long as hydrogen and oxygen are supplied. Also, because there is no heat loss, fuel cells have the advantage of being about twice as efficient as internal combustion engines.

A fuel cell system includes a stack, which is an electricity-generating assembly of unit fuel cells including an air electrode and a fuel electrode, an air supply device for supplying air to the air electrode of the fuel cell, and a hydrogen supply device for supplying hydrogen to the fuel electrode of the fuel cell.

In a polymer fuel cell of the fuel cell system, adequate moisture is required for an ion exchange membrane of a membrane-electrode assembly (MEA) to function smoothly, and to this end, a humidifier for humidifying air supplied to the fuel cell is provided in the air supply device of the fuel cell system.

The humidifier humidifies dry gas supplied through an air compressor of the air supply device by using moisture of high temperature and high humidity exhaust gas discharged from the air electrode of the fuel cell, and supplies the humidified air to the air electrode of the fuel cell.

The humidifier of the fuel cell uses a membrane humidifying method. The humidifier uses the membrane humidifying method to perform membrane humidification through a gas to gas moisture exchange method between a high temperature and high humidity exhaust gas and a dry gas supplied through the air compressor.

A cartridge with a humidification membrane including a hollow fiber membrane may be provided in the humidifier of the fuel cell. Dry gas passes through the inside of the hollow fiber membrane from one side of the cartridge to the other side of the cartridge, and an opening (window) that is open to the outside is provided in a side surface of the cartridge.

The exhaust gas enters the cartridge through the opening in the cartridge, and the exhaust gas that has entered the cartridge undergoes, through the hollow fiber membrane, moisture exchange with the dry gas passing through the inside of the hollow fiber membrane.

However, the humidifier for a fuel cell using a related-art cartridge has problems as described below. Recently, demands for humidifiers for a high-output fuel cell have increased, and following the need for the development of humidifiers for a high-output fuel cell, a humidifier for a large capacity fuel cell has been developed.

To implement a humidifier for a high-output fuel cell, the volume of a housing increases and a plurality of cartridges may be provided in the housing. The number of cartridges provided in the housing may be changed depending on the amount of humidified air supplied to the fuel cell, and when high output is required, the number of cartridges may be increased.

However, as the number of cartridges provided in the housing increases following the increase in volume of the housing, there is a problem in that the fluid distribution inside the housing is deteriorated. Specifically, when three or more cartridges are continuously arranged in the housing, due to the nature of a high-output membrane humidifier, a dead zone occurs in which fluid cannot easily reach, thereby deteriorating fluid distribution.

### Disclosure of Invention

### Technical Problem

The present disclosure is intended to resolve the problems described above, and more specifically, relates to a membrane humidifier, in which a baffle is provided for a fuel cell, , the membrane humidifier including the baffle, a mid-end cap, and a fluid movement unit through which fluid enters and exists and which is coupled to a mid-case so that flow distribution of a large capacity membrane humidifier may be enhanced.

### Solution to Problem

A membrane humidifier, in which a baffle is provided, for a fuel cell according to an embodiment is a membrane humidifier for a fuel cell which humidifies gas to be supplied to a fuel cell stack. The membrane humidifier includes a mid-case in which a fluid movement port through which fluid passes is provided, a fluid movement unit coupled to the fluid movement port of the mid-case, and a cartridge which is arranged inside the mid-case and in which a humidification membrane is provided, wherein the fluid movement unit includes a baffle which is inserted into the fluid movement port and in which a plurality of windows are provided, and a mid-end cap coupled to the mid-case outside the fluid movement port.

The fluid movement unit of the membrane humidifier in which the baffle is provided, according to an embodiment, may include a fluid port coupled to one side of the mid-end cap, the fluid port may be coupled on one side of the mid-end cap, and the mid-case may be coupled on the other side of the mid-end cap.

The fluid movement unit of the membrane humidifier, in which the baffle is provided, for a fuel cell, according to an embodiment, may include a first packing member to be inserted between the mid-end cap and the fluid port.

A first packing groove into which the first packing member is insertable may be provided in one side of the mid-end cap of the membrane humidifier, according to an embodiment, for the fuel cell in which the baffle is provided.

The other side of the mid-end cap of the membrane humidifier, in which the baffle is provided, for the fuel cell according to an embodiment, may have a greater cross-sectional area than one side of the mid-end cap.

The fluid movement unit of the membrane humidifier, in which the baffle is provided, for the fuel cell according to an embodiment, may include a second packing member to be inserted between the mid-case and the mid-end cap.

A second packing groove into which the second packing member is insertable may be provided in the mid-case of the membrane humidifier, in which the baffle is provided, for the fuel cell according to an embodiment.

The second packing member of the membrane humidifier, in which the baffle is provided, for the fuel cell according to an embodiment, may include a body portion arranged outside the fluid movement port, and a protrusion portion protruding the main body, and the protrusion portion may be inserted into the second packing groove.

The body portion of the membrane humidifier, in which the baffle is provided, for the fuel cell according to an embodiment, may cover the baffle while coming into contact with an upper portion of the baffle, and the protrusion portion may be inserted into the second packing groove, which is formed at a point spaced apart outward from the fluid movement port into which the baffle is inserted.

The baffle of the membrane humidifier in which the baffle is provided, according to an embodiment, may include a lower plate in which the plurality of windows are provided, and a side plate protruding upward along an outer edge of the lower plate.

A through hole may be provided in the side plate of the membrane humidifier, in which the baffle is provided, for the fuel cell according to an embodiment.

A coupling portion protruding outward from the side plate may be provided above the side plate of the baffle of the membrane humidifier, in which the baffle is provided, for the fuel cell, according to an embodiment, a coupling groove extending outward from the fluid movement port may be provided above the fluid movement port of the mid-case, and the coupling portion may be seated in the coupling groove.

The baffle of the membrane humidifier, in which the baffle is provided, for the fuel cell according to an embodiment, may include a plurality of open portions in which the plurality of windows are provided and through which fluid moves, and a plurality of blocking portions which are provided between the open portions and block fluid movement.

The number of open portions provided in the baffle of the membrane humidifier, in which the baffle is provided, for the fuel cell, according to an embodiment, may be equal to the number of cartridges arranged along a longitudinal direction of the mid-case.

The fluid movement port provided in the mid-case of the membrane humidifier, in which the baffle is provided, for the fuel cell, according to an embodiment, may be opened in any one direction among an upward direction of the mid-case, a downward direction of the mid-case, and a lateral direction of the mid-case, and a diagonal direction of the mid-case.

An inclination portion may be provided on a sidewall of the mid-end cap of the membrane humidifier, in which the baffle is provided, for the fuel cell, according to an embodiment.

### Advantageous Effects of Invention

The present disclosure relates to a membrane humidifier, in which a baffle is provided, for a fuel cell, wherein a fluid movement unit which includes a baffle and a mid-end cap and through which fluid enters or exits is coupled to a mid-case, and there is an advantage in that flow distribution of a large capacity membrane humidifier may be enhanced.

In addition, in the present disclosure, fluid is primarily distributed through a mid-end cap having a cross-sectional area increasing from one side to the other side, and fluid is secondarily distributed through the baffle before the fluid reaches the cartridge, and thus there is an advantage in that fluid distribution of the membrane humidifier may be enhanced.

In addition, in the present disclosure, as the fluid distribution is enhanced by distributing fluid through the baffle and the mid-end cap in the high-output membrane humidifier in which three or more cartridges are provided, there is an advantage in that the humidification performance of the membrane humidifier may be enhanced.

In addition, in the present disclosure, as the fluid distribution is enhanced by distributing fluid through the baffle and the mid-end cap in the high-output membrane humidifier in which three or more cartridges are provided, there is an advantage in that the durability of the membrane humidifier may be enhanced.

In addition, in the present disclosure, a first packing member provided between a fluid port and the mid-end cap and a second packing member arranged between the mid-end cap and a mid-case are used, and thus there is an advantage in that sealing performance may be enhanced between the fluid movement unit and the mid-case.

Together with the above, the present disclosure has an advantage in that seating stability of the baffle may be ensured while enhancing the sealing performance between the mid-case and the mid-end cap through the second packing member.

### Brief Description of Drawings

FIG. 1 is a diagram illustrating a fluid movement unit including a baffle and a mid-end cap that are coupled to a mid-case, according to an embodiment of the present disclosure.
FIG. 2 is a diagram illustrating a direction in which fluid moves in a state in which the fluid movement unit is coupled to the mid-case, according to an embodiment of the present disclosure.
FIG. 3 is a diagram illustrating a fluid port, a first packing member, and a mid-end cap according to an embodiment of the present disclosure.
FIG. 4 is a diagram illustrating the mid-end cap, a second packing member, a baffle, and a mid-case according to an embodiment of the present disclosure.
FIG. 5 is a cross-sectional view illustrating a state in which the mid-end cap, the second packing member, and the baffle are coupled to the mid-case, according to an embodiment of the present disclosure.
FIG. 6 is a perspective view illustrating the baffle according to an embodiment of the present disclosure.
FIG. 7 is a plan view illustrating the baffle according to an embodiment of the present disclosure.
FIG. 8 is a diagram illustrating a fluid analysis of a membrane humidifier in which the mid-end cap is not provided and the fluid port is coupled to the mid-case.
FIG. 9 is a diagram illustrating a fluid analysis of a membrane humidifier in which the mid-end cap is provided in the fluid movement unit, according to an embodiment of the present disclosure.
FIG. 10 is a diagram illustrating a fluid analysis of a membrane humidifier in which the mid-end cap and the baffle are provided in the fluid movement unit, according to an embodiment of the present disclosure.
FIG. 11 is a diagram illustrating a fluid movement port open in a side direction or in a diagonal direction, according to an embodiment of the present disclosure.
FIG. 12 is a diagram illustrating an inclination portion provided in a sidewall of the mid-end cap, according to an embodiment of the present disclosure.

### Mode for the Invention

The present specification clarifies the scope of rights of the present disclosure, and describes the principles of the present disclosure and discloses embodiments such that one of ordinary skill in the art to which the present disclosure pertains may work the present disclosure. The disclosed embodiments may be implemented in various forms.

The expressions "include" or "may include", etc. which may be used in various embodiments of the present disclosure indicate the presence of the corresponding function, operation or element that are disclosed, and do not limit one or more additional functions, operations, or elements, etc. In addition, in various embodiments of the present disclosure, the terms "include" or "have" should be construed to designate the presence of a feature, number, step, operation, component, or a combination thereof described in the specification, and not to exclude, in advance, the presence or the possibility of addition of one or more other features, numbers, steps, operations, elements, components, or a combination thereof.

When it is mentioned that an element is "connected or coupled" to another element, it should be construed that the element may be directly connected or coupled to the other element, but another new element may be present between the element and the other element. On the other hand, when it is mentioned that an element is "directly connected" or "directly coupled" to another element, it should be construed that no new element is present between the element and the other element.

The terms "first", "second", etc. used in the present specification may be used to describe various elements, but the elements should not be limited by those terms. The terms are only used for the purpose of distinguishing one element from another element.

The present disclosure relates to a membrane humidifier, in which a baffle is provided, for a fuel cell, and to a membrane humidifier, in which a baffle is provided, for a fuel cell, wherein a fluid movement unit which includes the baffle and a mid-end cap and through which fluid enters and exits is coupled to a mid-case so that flow distribution of a large capacity membrane humidifier may be enhanced. Hereinafter, preferred embodiments of the present disclosure are described in detail with reference to the accompanying drawings.

A membrane humidifier, in which a baffle is provided, for a fuel cell according to an embodiment of the present disclosure includes a mid-case 110, a cartridge 130, and a fluid movement unit 140.

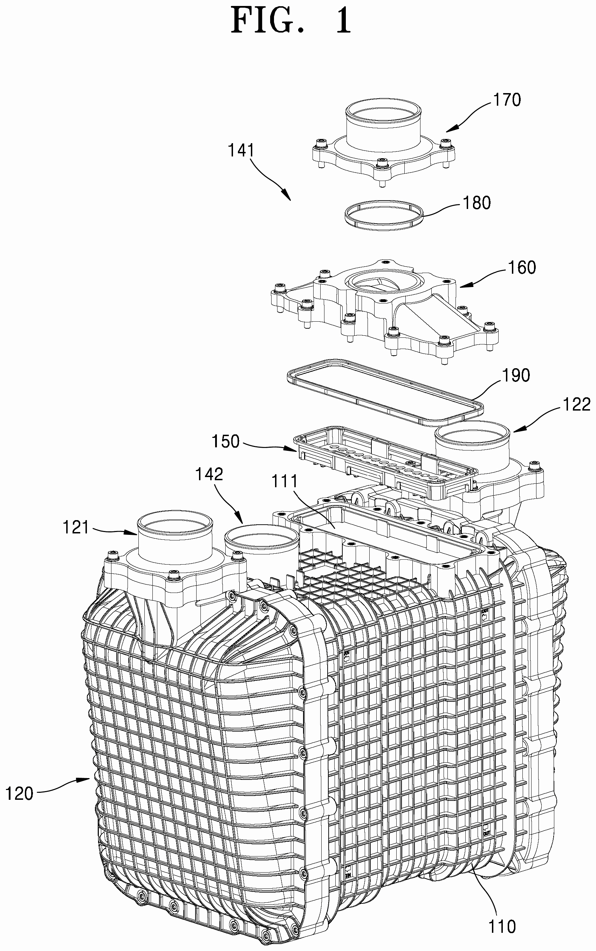

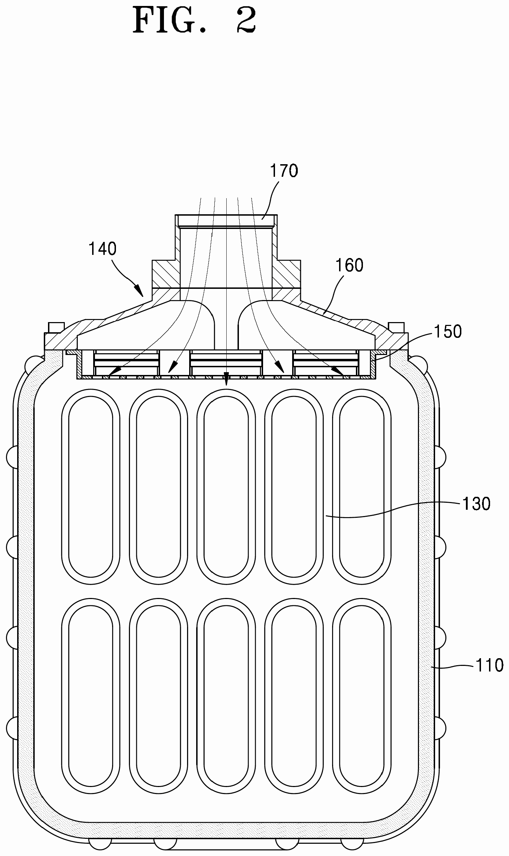

Referring to FIGS. 1 and 2, the mid-case 110 is provided with a fluid movement port 111 through which fluid passes, and the mid-case 110 may be a housing of the membrane humidifier for a fuel cell.

The fluid movement port 111 provided in the mid-case 110 may be a hole formed in the outside of the mid-case 110. Fluid may enter the mid-case 110 through the fluid movement port 111, and fluid inside the mid-case 110 may be discharged to the outside through the fluid movement port 111.

The fluid movement unit 140 may be arranged in the fluid movement port 111, and the fluid movement unit 140 may be a fluid entrance and exit through which fluid moves. According to an embodiment of the present disclosure, the fluid movement unit 140 may include a fluid entrance unit 141 through which fluid is moved into the mid-case 110 and a fluid discharge unit 142 through which fluid inside the mid-case 110 is discharged to the outside.

According to an embodiment of the present disclosure, an end cap 120 may be coupled to the mid-case 110. The end cap 120 may be coupled to one side and the other side of the mid-case 110.

The end cap 120 may have an air inlet 121 for supplying dry air to the mid-case 110 and an air outlet 122 for discharging humidified air from the mid-case 110.

Specifically, the air outlet 122 may be provided in the end cap 120 that is coupled to one side of the mid-case 110, and the air inlet 121 may be provided in the end cap 120 that is coupled to the other side of the mid-case 110. The air outlet 122 is connected to a fuel cell stack, and humidified air discharged through the air outlet 122 may be supplied to the fuel cell stack.

A high temperature and high humidity exhaust gas discharged from the fuel cell stack may be introduced into the mid-case 110 through the fluid entrance unit 141 provided in the mid-case 110.

The exhaust gas introduced into the mid-case 110 may supply moisture to dry air supplied to the mid-case 110 through the air inlet 121 of the end cap 120.

The exhaust gas supplying moisture to the dry air may be discharged to the outside through the fluid discharge unit 142 provided in the mid-case 110. The dry air humidified through the mid-case 110 is discharged through the air outlet 122, and accordingly, the humidified air is supplied to the fuel cell stack.

According to an embodiment of the present disclosure, the end cap 120 may be coupled to one side and the other side of the mid-case 110, but the end cap 120 may be integrally formed as a single body with the mid-case 110.

Referring to FIG. 2, the cartridge 130 may be arranged inside the mid-case 110 and may have a humidification membrane. The cartridge 130 may include an inner case in which the humidification membrane is arranged and a fixing unit which fixes the humidification membrane from one side and the other side of the inner case.

The humidification membrane may be arranged inside the inner case. The humidification membrane may be a humidification membrane which performs moisture exchange between exhaust gas and dry air, and one or more humidification membranes may be provided inside the inner case. According to an embodiment of the present disclosure, the humidification membrane may include a hollow fiber membrane. However, the disclosure is not limited thereto, and the humidification membrane may include any type of humidification membrane capable of performing moisture exchange between exhaust gas and dry air.

The fixing unit fixes the humidification membrane to the inner case from one side and the other side of the inner case, and the fixing unit may include a potting layer. The fixing unit may isolate an internal space of the inner case, and because the fixing unit is provided in one side and the other side of the inner case, dry air may move only through the inside of the humidification membrane or through a void of the humidification membrane.

According to an embodiment of the present disclosure, a plurality of cartridges 130 may be provided inside the mid-case 110. Referring to FIG. 2, the plurality of cartridges 130 may be arranged along a transverse direction inside the mid-case 110.

When the plurality of cartridges 130 are arranged inside the mid-case 110, fluid distribution inside the mid-case 110 may be deteriorated. Specifically, when three or more cartridges 130 are arranged along the transverse direction inside the mid-case 110, a dead zone that fluid cannot easily reach occurs, thereby deteriorating fluid distribution.

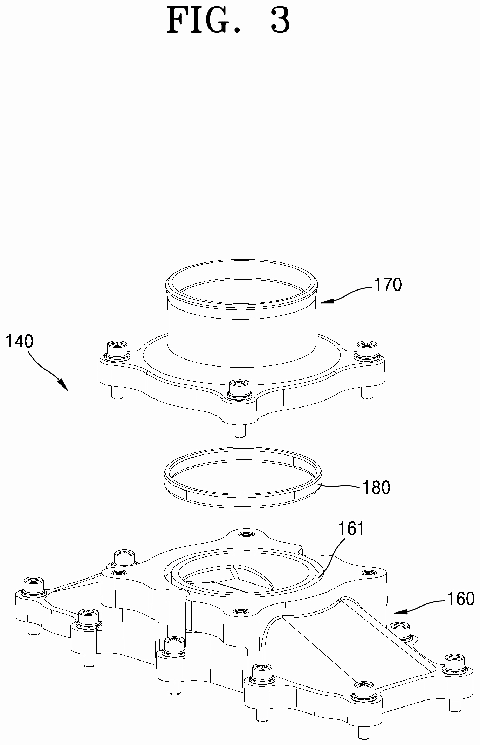

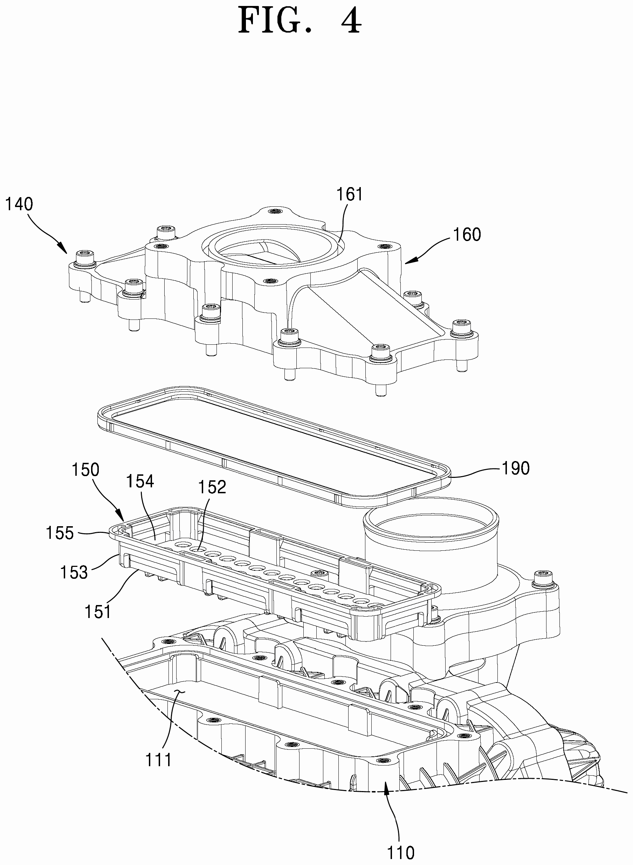

Referring to FIGS. 3 and 4, the fluid movement unit 140 according to an embodiment of the present disclosure may include a baffle 150 and a mid-end cap 160 so as to improve fluid distribution inside the mid-case 110.

The baffle 150 is provided in the fluid movement port 111, and a plurality of windows 152 are provided. The mid-end cap 160 is connected to the mid-case 110 outside the fluid movement port 111. The fluid movement unit 140 may improve fluid distribution inside the mid-case 110 through the baffle 150 and the mid-end cap 160.

According to an embodiment of the present disclosure, the baffle 150 may be integrally formed as a single body with the mid-case 110. In addition, the baffle 150 may also include a member that is inserted into the fluid movement port 111 of the mid-case 110, as shown in FIG. 1.

According to an embodiment of the present disclosure, the mid-end cap 160 may be connected while being integrally provided as a single body with the mid-case 110. In addition, the mid-end cap 160 may include a member that is coupled to the mid-case 110 while being separated from the mid-case 110, as shown in FIG. 1. Hereinafter, it is described based on a case where the baffle 150 and the mid-end cap 160 include a member separated from the mid-case 110.

According to an embodiment of the present disclosure, the fluid movement unit 140 may be applied to the fluid entrance unit 141 that moves fluid into the mid-case 110, and the fluid movement unit 140 may be applied to the fluid discharge unit 142 that discharges fluid within the mid-case 110 to the outside.

Hereinafter, the fluid movement unit 140 is described in detail based on a case where the fluid movement unit 140 is applied to the fluid entrance unit 141 that moves fluid into the mid-case 110.

Referring to FIGS. 3 and 4, the mid-end cap 160 is connected to the mid-case 110 outside the fluid movement port 111, and the other side of the mid-end cap 160 may be formed to be have a greater cross-sectional area than one side of the mid-end cap 160.

Specifically, the mid-end cap 160 has a cross-sectional area that increases toward the other side from one side, and an area in which fluid may move increases as it moves from one side of the mid-end cap 160 toward the other side of the mid-end cap 160.

Referring to FIG. 3, the fluid movement unit 140 according to an embodiment of the present disclosure may include a fluid port 170 provided in one side of the mid-end cap 160. The fluid port 170 may be a port that is provided in one side of the mid-end cap 160 and introduces fluid into the mid-end cap 160. According to an embodiment of the present disclosure, the mid-end cap 160 and the fluid port 170 may be integrally formed as a single body.

The fluid port 170 may be provided in one side of the mid-end cap 160, and the mid-case 110 may be connected on the other side of the mid-end cap 160. When the fluid port 170 is provided in one side of the mid-end cap 160, fluid may be introduced into one side of the mid-end cap 160.

Here, the mid-end cap 160 may be connected to the mid-case 110 while being integrally formed as a single body with the mid-case 110. In addition, the mid-end cap 160 may also include a member separated from the mid-case 110.

As described above, the mid-end cap 160 has a cross-sectional area that increases toward the other side from one side, and an area in which fluid may move increases as it moves from one side of the mid-end cap 160 toward the other side of the mid-end cap 160.

Accordingly, fluid introduced into one side of the mid-end cap 160 may be distributed as it moves to the other side of the mid-end cap 160. An area of the other side of the mid-end cap 160 may be equal to or slightly greater than an area of the fluid movement port 111 formed in the mid-case 110.

The other side of the mid-end cap 160 is connected to the fluid movement port 111 formed in the mid-case 110, and fluid passing through the outside of the mid-end cap 160 may be introduced into the mid-case 110 through the fluid movement port 111.

The fluid introduced into one side of the mid-end cap 160 may be distributed as it moves to the other side of the mid-end cap 160, and accordingly, the fluid introduced into one side of the mid-end cap 160 may be distributed when the fluid passes through the fluid movement port 111. Through this, the fluid distribution of the fluid introduced into the mid-case 110 may be enhanced.

The baffle 150 may be integrally formed as the mid-case 110, and the baffle 150 may include a member separated from the mid-case 110 and may be inserted into the fluid movement port 111.

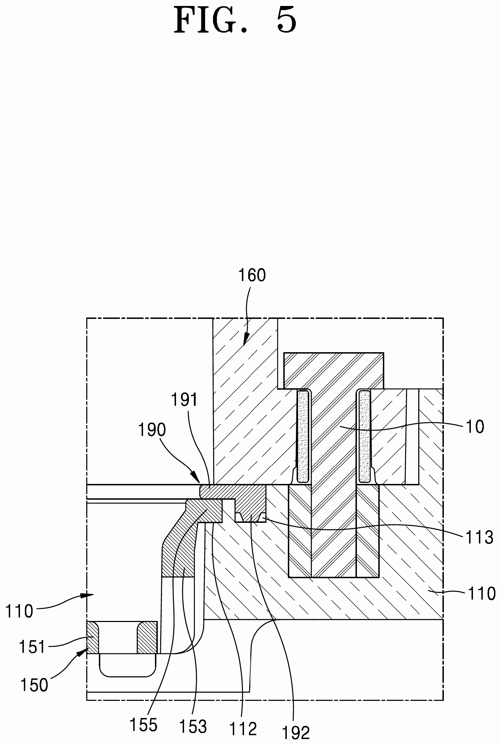

Referring to FIGS. 4 and 5, the baffle 150 may be inserted into the fluid movement port 111. Referring to FIG. 5, after the baffle 150 is inserted into the fluid movement port 111 formed in the mid-case 110, the mid-end cap 160 may be coupled to the mid-case 110. The mid-end cap 160 may be coupled to the mid-case 110 through a bolt 10, etc.

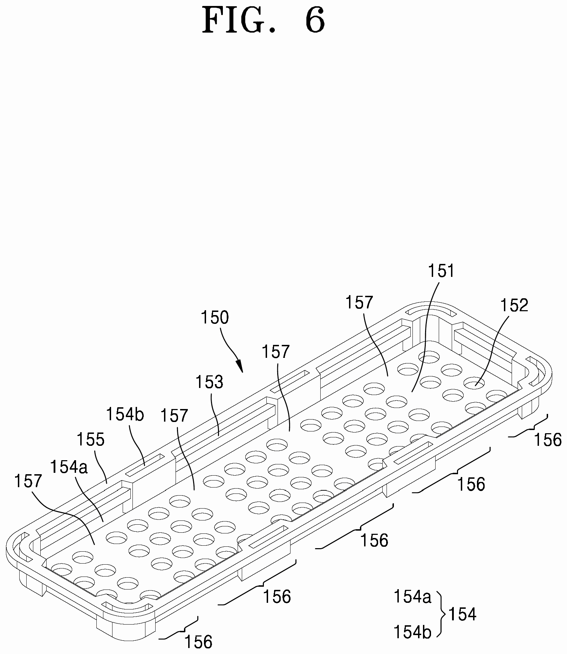

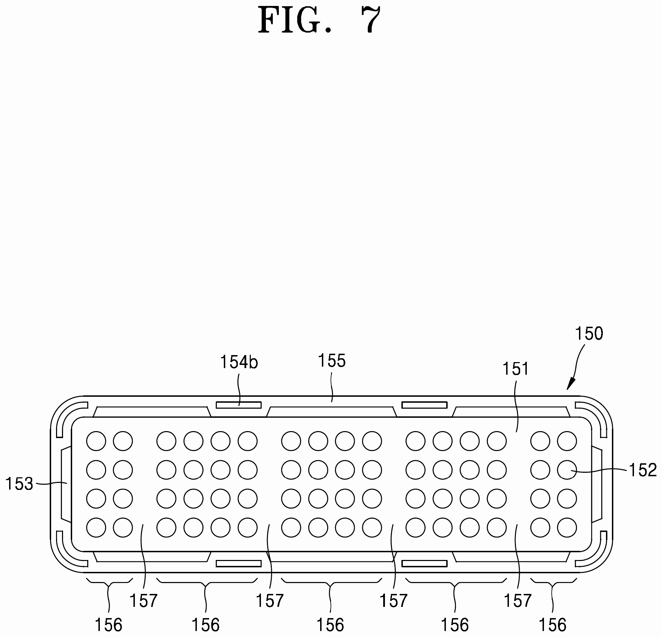

The plurality of windows 152 may be provided in the baffle 150. Referring to FIGS. 6 and 7, the baffle 150 may include a lower plate 151 in which the plurality of windows 152 are provided and a side plate 153 which protrudes upward along the outer edge of the lower plate 151.

The lower plate 151 may be formed in a plate shape, and the plurality of windows 152 may be provided in the lower plate 151. According to an embodiment of the present disclosure, the window 152 may be a hole passing through the lower plate 151, and the plurality of windows 152 may be formed at various points of the lower plate 151.

The side plate 153 may be formed in a plate shape, and the side plate 153 may vertically extend along the outer edge of the lower plate 151. A through hole 154 passing through the side plate 153 may be provided in the side plate 153.

According to an embodiment of the present disclosure, the through hole 154 may be a hole formed in the side plate 153, and the plurality of through holes 154 may be provided in the side plate 153. The plurality of through holes 154 may be formed at various points of the side plate 153.

Specifically, the through hole 154 may be formed at a point where the lower plate 151 and the side plate 153 are connected. In addition, the through hole 154 may be formed at a middle point of the side plate 153.

According to an embodiment of the present disclosure, the through hole 154 may include a first through hole 154a which is provided below the side plate 153 and formed between the lower plate 151 and the side plate 153. The first through hole 154a may be a hole formed between the lower plate 151 and the side plate 153.

In addition, according to an embodiment of the present disclosure, the through hole 154 may include a second through hole 154b provided above the side plate 153 and longitudinally passing through the side plate 153. The second through hole 154b may be a hole that longitudinally passes through the side plate 153.

A membrane humidifier, in which a baffle is provided, for a fuel cell, according to an embodiment of the present disclosure may enhance fluid distribution inside the mid-case 110 through the baffle 150 and the mid-end cap 160.

A membrane humidifier, in which a baffle is provided, for a fuel cell, according to an embodiment of the present disclosure may primarily distribute the flow of fluid introduced into the mid-case 110 through the mid-end cap 160 having a cross-sectional area increasing toward the other side from one side.

Specifically, the fluid introduced into one side of the mid-end cap 160 may be distributed as it moves to the other side of the mid-end cap 160, and accordingly, the fluid introduced into one side of the mid-end cap 160 may be distributed when the fluid passes through the mid-end cap 160. Through this, the flow of the fluid introduced into the mid-case 110 may be primarily distributed.

The baffle 150 may be inserted into the fluid movement port 111, and a membrane humidifier, in which a baffle is provided, for a fuel cell, according to an embodiment of the present disclosure may secondarily distribute the flow of the fluid introduced into the mid-case 110 through the baffle 150.

Specifically, the fluid moving to the fluid movement port 111 through the mid-end cap 160 may be distributed while passing through the plurality of windows 152 and the through hole 154 provided in the baffle 150. Through this, the flow of the fluid introduced into the mid-case 110 may be secondarily distributed.

A coupling portion 155 protruding outward from the side plate 153 may be provided above the side plate 153 of the baffle 150. Referring to FIG. 5, the coupling portion 155 may be a portion that protruding in a wing shape from an upper portion of the side plate 153.

In addition, a coupling groove 112 extending outward from the fluid movement port 111 may be provided above the fluid movement port 111 of the mid-case 110. Referring to FIG. 5, the coupling groove 112 may be a groove that extends outward from an upper portion of the fluid movement port 111.

According to an embodiment of the present disclosure, the baffle 150 may be inserted into the fluid movement port 111 while the coupling portion 155 comes into contact with the coupling groove 112. Specifically, the baffle 150 may be seated and inserted into the fluid movement port 111 while being the coupling portion 155 is seated in the coupling groove 112.

Referring to FIG. 3, the fluid movement unit 140 according to an embodiment of the present disclosure may include a first packing member 180 provided between the mid-end cap 160 and the fluid port 170.

The first packing member 180 may seal between the mid-end cap 160 and the fluid port 170, and the first packing member 180 may be formed in a ring shape.

Referring to FIG. 3, a first packing groove 161 into which the first packing member 180 may be inserted may be provided in one side of the mid-end cap 160. The first packing groove 161 is a groove formed at one end of the mid-end cap 160, and the first packing groove 161 may be formed in a dug groove shape into which the first packing member 180 may be inserted.

When the first packing member 180 seals between the mid-end cap 160 and the fluid port 170, sealing performance between the mid-end cap 160 and the fluid port 170 may be enhanced.

Referring to FIG. 4, the fluid movement unit 140 according to an embodiment of the present disclosure may include a second packing member 190 provided between the mid-case 110 and the mid-end cap 160.

The second packing member 190 may seal between the mid-case 110 and the mid-end cap 160, and the second packing member 190 may be formed in a ring shape.

Referring to FIGS. 4 and 5, a second packing groove 113 into which the second packing member 190 may be inserted may be provided in the mid-case 110. The second packing groove 113 is a groove formed outside the fluid movement port 111 formed in the mid-case 110, and the second packing groove 113 may be formed in a dug groove shape into which the second packing groove 113 may be inserted.

Referring to FIG. 5, the second packing member 190 according to an embodiment of the present disclosure may include a body portion 191 and a protrusion portion 192. The body portion 191 is arranged outside the fluid movement port 111, and the body portion 191 may seal between the mid-case 110 and the mid-end cap 160.

The protrusion portion 192 protrudes from the body portion 191, and the protrusion portion 192 may be inserted into the second packing groove 113. When the protrusion portion 192 is inserted into the second packing groove 113, the second packing member 190 may be fixed between the mid-case 110 and the mid-end cap 160.

Specifically, when the protrusion portion 192 is inserted into the second packing groove 113 and then the mid-end cap 160 is coupled to the mid-case 110, the mid-end cap 160 covers the outside of the protrusion portion 192 so that the second packing member 190 may be fixed between the mid-case 110 and the mid-end cap 160.

According to an embodiment of the present disclosure, the body portion 191 may cover the baffle 150 while coming into contact with an upper portion of the baffle 150. Referring to FIG. 5, the body portion 191 may be in contact with the upper portion of the side plate 153 of the baffle 150, and the body portion 191 may extend outward from the fluid movement port 111 while covering the coupling portion 155 provided in the side plate 153.

Referring to FIG. 5, the protrusion portion 192 may be inserted into the second packing groove 113, which is formed at a point spaced apart outward from the fluid movement port 111 into which the baffle 150 is inserted.

The second packing groove 113 may be formed at a point spaced apart from the fluid movement port 111 into which the baffle 150 is inserted. Specifically, the second packing groove 113 may be formed at a point spaced apart outward from the coupling groove 112 provided in the fluid movement port 111.

The protrusion portion 192 may be inserted into the second packing groove 113 formed at a point spaced apart outward from the coupling groove 112 provided in the fluid movement port 111, and accordingly, the upper portion of the baffle 150 may be covered by the body portion 191.

The second packing member 190 according to an embodiment of the present disclosure may ensure seatability of the baffle 150 while enhancing the sealing performance between the mid-case 110 and the mid-end cap 160.

The protrusion portion 192 of the second packing member 190 is inserted into the second packing groove 113 of the mid-case 110, and after the protrusion portion 192 is inserted into the second packing groove 113, the mid-case 110 and the mid-end cap 160 may be coupled so that the mid-end cap 160 covers the outside of the protrusion portion 192, thereby stably fixing the second packing member 190.

In this case, the body portion 191 of the second packing member 190 may come into contact with the upper portion of the baffle 150 and press the baffle 150. Referring to FIG. 5, the body portion 191 may extend to the outside of the fluid movement port 111 while covering the coupling portion 155 provided in the side plate 153, thereby pressing the baffle 150 to the body portion 191.

The second packing member 190 is fixed through the second packing groove 113 of the mid-case 110 and the mid-end cap 160, and the baffle 150 is pressed and fixed through the second packing member 190, thereby ensuring seatability of the baffle 150. Simultaneously, the sealing performance between the mid-case 110 and the mid-end cap 160 may be enhanced through the second packing member 190.

The baffle 150 according to an embodiment of the present disclosure may include a plurality of open portion 156 in which the plurality of windows 152 are provided, and fluid moves, and a plurality of blocking portions 157 provided between the open portions 156 to block fluid movement.

Referring to FIG. 7, the open portion 156 may be a space in which the plurality of windows 152 are formed and fluid moves, and the blocking portion 157 may be a space which is formed between the open portions 156 and the window 152 is not formed.

According to an embodiment of the present disclosure, the number of open portions 156 provided in the baffle 150 may be equal to the number of cartridges 130 transversely arranged in the mid-case 110.

When fluid passing through the fluid movement port 111 is distributed through the baffle 150, it is preferable to arrange the plurality of windows 152 of the baffle 150 in a direction in which large fluid is introduced into the cartridge 130.

To this end, the baffle 150 may separate the open portion 156 having the plurality of windows 152 through which fluid passes, and the blocking portion 157 which does not have the window 152 and through which fluid does not pass.

According to an embodiment of the present disclosure, when the plurality of open portions 156 are provided in the baffle 150, it is preferable to arrange the plurality of open portions 156 to respectively correspond to the plurality of cartridges 130 along a transverse direction of the mid-case 110.

To this end, the number of open portions 156 provided in the baffle 150 may be equal to the number of cartridges 130 transversely arranged in the mid-case 110.

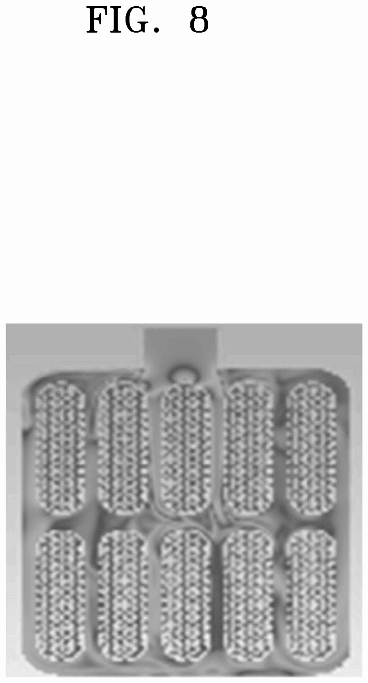

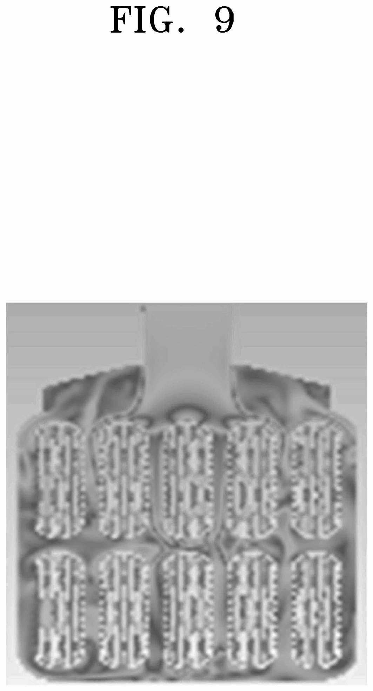

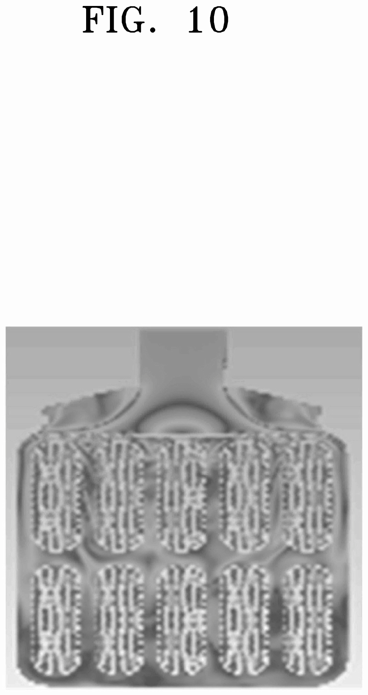

FIG. 8 is a diagram illustrating a flow analysis of a membrane humidifier in which the baffle 150 and the mid-end cap 160 are not provided, and the fluid port 170 is coupled to the mid-case 110. FIG. 9 is a diagram illustrating a flow analysis of a membrane humidifier in which the mid-end cap 160 is provided in the fluid movement unit 140, according to an embodiment of the present disclosure. FIG. 10 is a diagram illustrating a flow analysis of a membrane humidifier in which the mid-end cap 160 and the baffle 150 are provided in the fluid movement unit 140, according to an embodiment of the present disclosure.

When the plurality of cartridges 130 are provided inside the mid-case 110, when the baffle 150 and the mid-end cap 160 are not provided, as in FIG. 8, there is a risk in that the flow distribution inside the mid-case 110 may be deteriorated.

A membrane humidifier, in which a baffle is provided, for a fuel cell, according to an embodiment of the present disclosure, may primarily distribute the flow through the mid-end cap 160 having a cross-sectional area increasing toward the other side from one side, and before the flow reaches the cartridge 130, secondarily distribute the flow through the baffle 150, thereby enhancing flow distribution inside the mid-case 110.

Referring to FIG. 9, a membrane humidifier, in which a baffle is provided, for a fuel cell, according to an embodiment of the present disclosure may primarily distribute the flow through the mid-end cap 160 having a cross-sectional area increasing toward the other side from one side, so as to enhance flow distribution inside the mid-case 110.

Referring to FIG. 10, a membrane humidifier, in which a baffle is provided, for a fuel cell, according to an embodiment of the present disclosure may primarily distribute the flow through the mid-end cap 160, and before the flow reaches the cartridge 130, secondarily distribute the flow through the baffle 150, thereby further enhancing the flow distribution inside the mid-case 110.

According to an embodiment of the present disclosure, the fluid movement port 111 provided in the mid-case 110 may be opened to any one direction among an upward direction of the mid-case 110, a lateral direction of the mid-case 110, and a diagonal direction of the mid-case 110.

Referring to FIG. 1, the fluid movement port 111 provided in the mid-case 110 may be opened in the upward direction of the mid-case 110. The fluid movement port 111 may be provided above the mid-case 110 and opened in the upward direction of the mid-case 110. Here, the upward direction of the mid-case 110 may be a direction facing above the mid-case 110 based on FIG. 1.

In addition, the fluid movement port 111 provided in the mid-case 110 may be opened in a downward direction of the mid-case 110. The fluid movement port 111 may be provided below the mid-case 110 and opened in the downward direction of the mid-case 110. Here, the downward direction of the mid-case 110 may be a direction facing below the mid-case 110 based on FIG. 1.

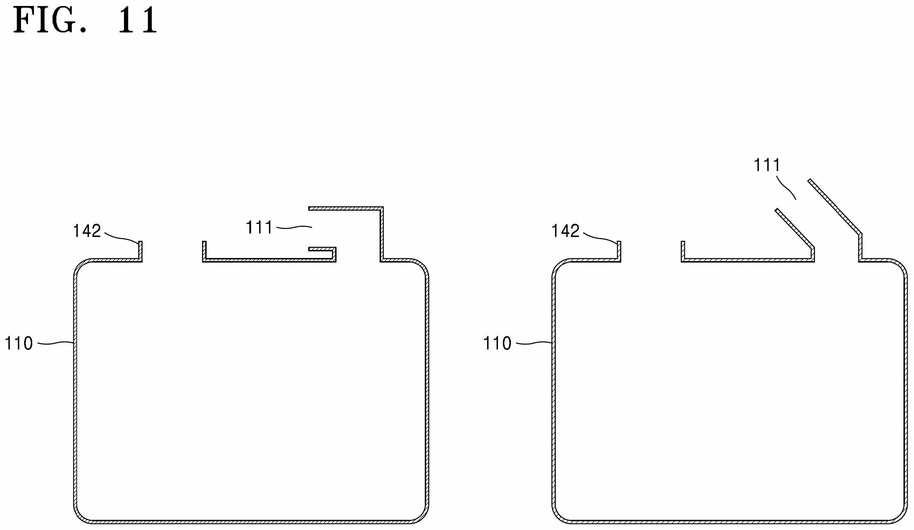

Referring to FIG. 11, the fluid movement port 111 provided in the mid-case 110 may be opened in the lateral direction of the mid-case 110. Specifically, a point at which the fluid movement port 111 is provided in the mid-case 110 may be vertically bent.

When the point at which the fluid movement port 111 is provided in the mid-case 110 is vertically bent, the fluid movement port 111 may be opened toward the lateral direction of the mid-case 110. The fluid movement port 111 may be provided above or below the mid-case 110 and opened in the lateral direction of the mid-case 110. Here, the lateral direction of the mid-case 110 may be a direction facing left and right of the mid-case 110 based on FIGS 1 and 11.

Referring to FIG. 11, the fluid movement port 111 provided in the mid-case 110 may be opened in the diagonal direction of the mid-case 110. Specifically, a point at which the fluid movement port 111 is provided in the mid-case 110 may be diagonally bent.

When the point at which the fluid movement port 111 is provided in the mid-case 110 is diagonally bent, the fluid movement port 111 may be opened toward the diagonal direction of the mid-case 110. The fluid movement port 111 may be provided above or below the mid-case 110 and opened in the diagonal direction of the mid-case 110.

Here, the diagonal direction of the mid-case 110 may be, based on FIGS. 1 and 11, a direction formed between the lateral direction of the mid-case 110 and the upward direction of the mid-case 110 or between the lateral direction of the mid-case 110 and the downward direction of the mid-case 110.

As described above, when the fluid movement port 111 provided in the mid-case 110 is formed and opened in any one direction among the upward direction of the mid-case 110, the downward direction of the mid-case 110, the lateral direction of the mid-case 110, and the diagonal direction of the mid-case 110, a direction of fluid introduced into the mid-case 110 may be formed as various directions. Through the above, a location of the fluid port 170 through which fluid exits or enters may be variously changed in accordance with a design condition.

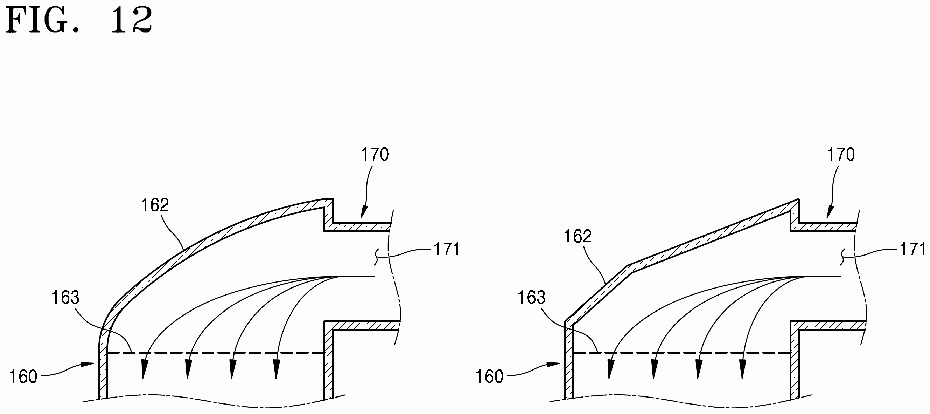

Referring to FIG. 12, when the fluid movement port 111 provided in the mid-case 110 is opened in any one direction among the lateral direction of the mid-case 110 and the diagonal direction of the mid-case 110, an inclination portion 162 may be provided in a sidewall of the mid-end cap 160.

Specifically, the inclination portion 162 may be provided a sidewall point of the mid-end cap 160 which is opposite to or faces an entrance point 171 of the fluid port 170. Referring to FIG. 12, the inclination portion 162 may be formed in a round shape. Specifically, the inclination portion 162 may be formed in a round shape in which a curvature is formed.

In addition, the inclination portion 162 may also be formed in a flat surface shape which is bent at a designated angle relative to a direction parallel to a direction in which air enters. Specifically, the inclination portion 162 may be formed as an inclined surface which is bent at a designated angle relative to a direction parallel to the direction in which air enters.

Here, it is preferable that the inclination portion 162 is bent at an acute angle relative to a direction parallel to the direction in which air enters the fluid port 170, but the inclination portion 162 may be bent at a right angle. In addition, two inclined surfaces may be included which are bent at different angles relative to a direction parallel to the direction in which air enters the fluid port 170.

As described above, when the inclination portion 162 is provided at the sidewall point of the mid-end cap 160, fluid passing through the mid-end cap 160 may be smoothly moved.

Referring to FIG. 12, a mid-end cap baffle 163 may be further provided in the mid-end cap 160. The mid-end cap baffle 163 may be identical to the baffle 150, and features applied to the baffle 150 may also be applied to the mid-end cap baffle 163.

When the mid-end cap 160 is further provided inside the mid-end cap 160, the flow distribution of fluid that moves the mid-end cap 160 may be enhanced.

The above-described membrane humidifier, in which a baffle is provided, for a fuel cell, according to an embodiment of the present disclosure has effects described below.

A membrane humidifier, in which a baffle is provided, for a fuel cell according to an embodiment of the present disclosure couples, to a mid-case, a fluid movement unit which includes a baffle and a mid-end cap and through which fluid enters and exits, and thus there is an advantage in that flow distribution of a large capacity membrane humidifier may be enhanced.

In addition, the membrane humidifier, in which a baffle is provided, for a fuel cell, according to an embodiment of the present disclosure, may primarily distribute the flow through a mid-end cap having a cross-sectional area increasing toward the other side from one side, and before the flow reaches a cartridge, secondarily distribute the flow through the baffle, and thus there is an advantage in that the flow distribution of the membrane humidifier may be enhanced.

In addition, the membrane humidifier, in which a baffle is provided, for a fuel cell, according to an embodiment of the present disclosure may distribute the flow through the baffle and a mid-end cap in a high output membrane humidifier having three or more cartridges so that the flow distribution may be improved, and thus there is an advantage in that humidifying performance of the membrane humidifier may be enhanced.

In addition, the membrane humidifier, in which a baffle is provided, for a fuel cell, according to an embodiment of the present disclosure may distribute the flow through the baffle and a mid-end cap in a high output membrane humidifier having three or more cartridges so that the flow distribution may be improved, and thus there is an advantage in that durability of the membrane humidifier may be enhanced.

In addition, the membrane humidifier, in which a baffle is provided, for a fuel cell, according to an embodiment of the present disclosure may utilize a first packing member provided between a fluid port and a mid-end cap and a second packing member arranged between the mid-end cap and a mid-case, and thus there is an advantage in that sealing performance between the fluid movement unit and the mid-case may be enhanced.

Together with the above, in the membrane humidifier, which a baffle is provided, for a fuel cell, in according to an embodiment of the present disclosure, there is an advantage in that seatability of the baffle may be ensured while enhancing sealing performance between the mid-case and the mid-end cap through the second packing member.

As described above, the present disclosure is described with reference to an embodiment shown in the drawings, but this is only an example, and it would be understood by one of ordinary skill in the art that various modifications and modification of the embodiment may be made thereto. Therefore, the true scope of technical rights of the present disclosure should be determined by the technical ideas of the accompanying claims.

## Claims

1. A membrane humidifier, in which a baffle is provided, for a fuel cell humidifies gas to be supplied to a fuel cell stack, the membrane humidifier comprising:
a mid-case in which a fluid movement port through which fluid passes is provided;
a fluid movement unit arranged in the fluid movement port of the mid-case; and
a cartridge which is arranged inside the mid-case and in which a humidification membrane is provided,
wherein the fluid movement unit includes:
a baffle which is provided in the fluid movement port and in which a plurality of windows are provided; and
a mid-end cap connected to the mid-case outside the fluid movement port.

2. The membrane humidifier of claim 1, wherein the fluid movement unit includes a fluid port provided in one side of the mid-end cap, and
the fluid port is provided in one side of the mid-end cap, and the mid-case is connected on the other side of the mid-end cap.

3. The membrane humidifier of claim 2, wherein the fluid movement unit includes a first packing member provided between the mid-end cap and the fluid port.

4. The membrane humidifier of claim 3, wherein a first packing groove into which the first packing member is insertable is provided in one side of the mid-end cap.

5. The membrane humidifier of claim 1, wherein the other side of the mid-end cap has a greater cross-sectional area than one side of the mid-end cap.

6. The membrane humidifier of claim 1, wherein the fluid movement unit includes a second packing member provided between the mid-case and the mid-end cap.

7. The membrane humidifier of claim 6, wherein a second packing groove into which the second packing member is insertable is provided in the mid-case.

8. The membrane humidifier of claim 7, wherein the second packing member includes a body portion arranged outside the fluid movement port, and a protrusion portion protruding from the body portion, and
the protrusion portion is inserted into the second packing groove.

9. The membrane humidifier of claim 8, wherein the body portion covers the baffle while coming into contact with an upper portion of the baffle, and the protrusion portion is inserted into the second packing groove, which is formed at a point spaced apart outward from the fluid movement port into which the baffle is inserted.

10. The membrane humidifier of claim 1, wherein the baffle includes a lower plate in which the plurality of windows are provided, and a side plate protruding upward along an outer edge of the lower plate.

11. The membrane humidifier of claim 10, wherein a through hole is provided in the side plate.

12. The membrane humidifier of claim 10, wherein a coupling portion protruding outward from the side plate is provided above the side plate of the baffle,
a coupling groove extending outward from the fluid movement port is provided above the fluid movement port of the mid-case, and
the coupling portion is seated in the coupling groove.

13. The membrane humidifier of claim 1, wherein the baffle includes a plurality of open portions in which the plurality of windows are provided and through which fluid moves, and a plurality of blocking portions which are provided between the open portions and block fluid movement.

14. The membrane humidifier of claim 1, wherein the fluid movement port provided in the mid-case is opened in any one direction among an upward direction of the mid-case, a downward direction of the mid-case, a lateral direction of the mid-case, and a diagonal direction of the mid-case.

15. The membrane humidifier of claim 1, wherein an inclination portion is provided on a sidewall of the mid-end cap.
